# EUROPEAN PATENT SPECIFICATION

(11) **EP 0 593 231 B1**
(45) Date of publication and mention of the grant of the patent: **18.12.1996**
(21) Application number: 93308054.1
(22) Date of filing: 08.10.1993
(51) Int. Cl.: C09J 201/00

(54) **Method of improving pressure-sensitive adhesives**
Verfahren zur Verbesserung druckempfindlicher Klebmittel
Procédé pour améliorer les adhésifs sensibles à la pression

(30) Priority: 15.10.1992 US 961246
(43) Date of publication of application: 20.04.1994
(73) Proprietor: ROHM AND HAAS COMPANY, Philadelphia Pennsylvania 19105 (US)
(72) Inventor: Arnwine Jr., Allen Carleton, Flourtown, Pennsylvania 19031 (US); Sheasley, William David, New Britain, Pennsylvania 18901 (US)
(74) Representative: Angell, David Whilton

(56) References cited:
- WO-A-91/18739

## Description

The present invention relates to a method of improving the perfomance of pressure-sensitive adhesives (PSAs) at temperatures below -17.8°C (0°F).

Pressure-sensitive adhesive (PSA) polymers are known in the art. Typically, PSA polymers, and therefore PSAs, do not exhibit acceptable adhesion to substrates at temperatures below -17.8°C (0°F).

US-A-5,049,608 discloses a PSA composition having good low temperature and room temperature performance comprising (a) a 2-ethylhexyl acrylate/polar monomer copolymer emulsion, the copolymer having a Tg from - 70° to - 40° C and (b) 3 to 9 wt %, based on copolymer, nonionic C₇ to C₁₈ alkylphenoxy poly(ethyleneoxy) ethanol having at least 70 ethyleneoxy units.

The present invention seeks to overcome the problems associated with the prior art PSAs.

According to the present invention there is provided a method of improving the performance of a pressure sensitive adhesive at temperatures below -17.8°C (0°F) comprising mixing (such as formulating) the adhesive polymer with an amount of from 0.5 to 20 weight percent of a ethyleneoxide/ propyleneoxide block copolymer surfactant based on total composition.

Preferably, the amount of ethyleneoxide/propyleneoxide block copolymer surfactant is in an amount of from 1 to 16 weight percent.

Preferably, the adhesive polymer contains up to 98% ethylhexyl acrylate and up to 99% acrylic or methacrylic esters of C₄ to C₁₂ alkanols.

Preferably, the adhesive polymer contains from 40 to 99% of 2-ethylhexyl acrylate or butyl acrylate.

Preferably, the ethylene oxide/propylene oxide block copolymer has a molecular weight of from 1,000 to 7,000.

Preferably, the ethylene oxide/propylene oxide block copolymer has a molecular weight of from 1500 to 4,000.

The advantages of the present invention are that it provides a method for improving the performance of PSAs in freezer-grade applications. Also, the method can extend the performance of PSAs to temperatures below -17.8 (0°F), and preferably to -28.8°C (-20°F).

The invention provides a method of improving the performance of a pressure-sensitive adhesive at temperatures below -17.8 (0°F) comprising formulating the adhesive with from 0.5 to 20 weight percent of a ethyleneoxide/ propyleneoxide block copolymer surfactant based on total composition. Preferred adhesive polymers are emulsion polymers which have a Tg below -25°C. These adhesives will generally contain from 0 to 98% of 2-ethylhexylacrylate or from 0 to 99% of acrylic or methacrylic esters of C₄ to C₁₂ alkanols, such as butyl acrylate. Polymers and copolymers which contain at least 40% of 2-ethylhexylacrylate or butylacrylate are preferred.

The copolymer may also contain up to 25 weight percent of other comonomers typically used in the acrylic PSA art such as, for example, vinyl chloride, styrene, copolymerizable carboxylic acids, and (meth)acrylamide.

The ethylene oxide/propylene oxide block copolymer surfactants are commercially available, for example, under the name Pluronic^{TM} Surfactants (available from BASF Corporation). According to trade literature, the Pluronics are composed of a hydrophobe, formed by the controlled addition of propylene oxide to the two hydroxyl groups of propylene glycol, and ethylene oxide added to both ends of the hydrophobe at from 10% to 80% by weight of the final molecule (structurally an EO-PO-EO block copolymer).

Generally, the ethylene oxide/propylene oxide block copolymer surfactants used in the invention have a number average molecular weight of from 1000 to 7000. The preferred molecular weight of the block copolymer is from 1500 to 4000 number average molecular weight.

The water soluble polyether compound is used in amounts from 0.5 to 20 weight percent based on total emulsion. The preferred amount of water soluble polyether is from to 1 16 weight percent.

The present invention will now be described only by way of examples.

### Test method - Peel:

The method described in PSTC-1 (revised 8/89) was used to measure peel, with the following noted changes. Prior to conducting the test, the test panels, hand roller and sample strips were conditioned in a cold box at the testing temperature indicated in the reported experiment. Lamination of the sample strips and the test panel was done with roller in the cold box. The panel bearing the sample was dwelled in the cold box. At the time of the experiment, test samples were taken from the cold box and placed directly onto the testing apparatus.

Polymer A is a 2-ethylhexyl acrylate/butyl acrylate-containing polymer having a Tg of -54°C.

### Formulation of Adhesives:

50 grams of Additive was blended into 1000 grams of Polymer A until homogeneous mixture was achieved.

### Preparation of Label

Adhesive label stock was prepared by applying the adhesive to 22.7 kg (50 lb.) silicone release liner at 26 grams/sq. meter to produce a final dry film and then laminated to 22.7 kg (50 lb.) litho facestock paper.

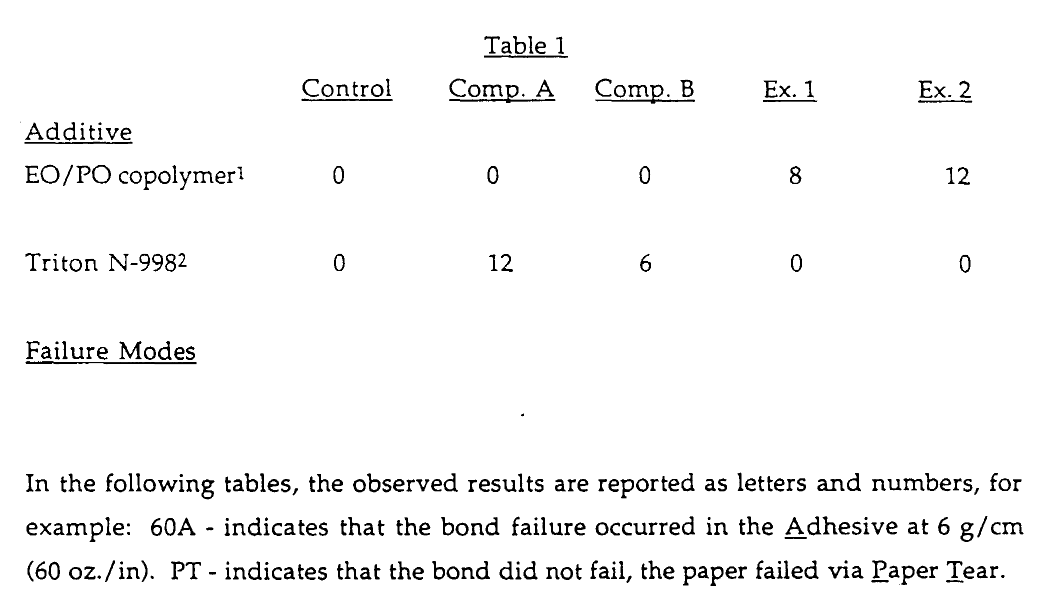

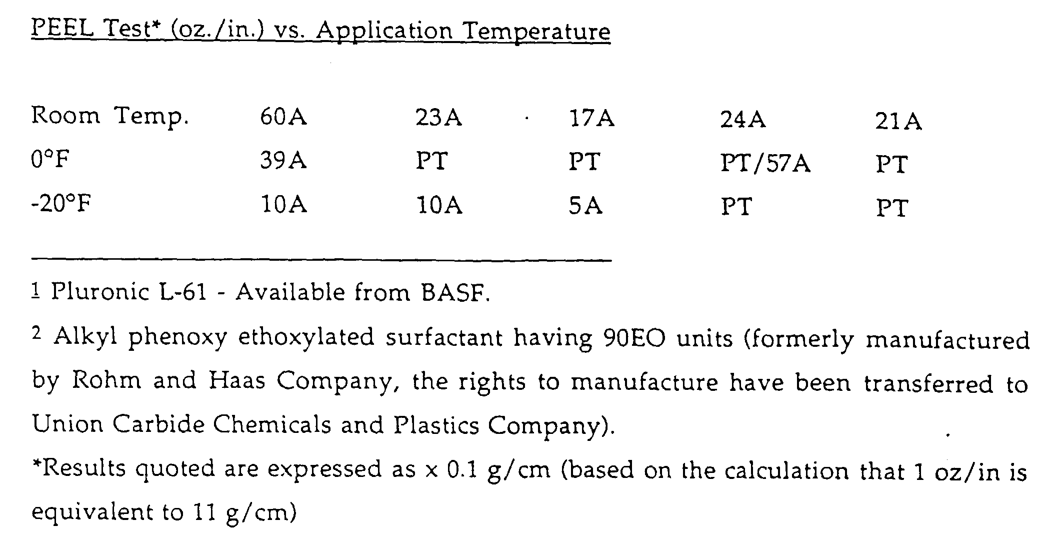

The data in Table 1 indicate that Example 1 and Example 2 adhesives produced improved performance over the control at -17.8°C (0°F) and -28.8°C (-20°F).

Examples 1 and 2 produced a bond at -28.8°C (-20°F) which survived the peel test, producing paper tear.

This is a surprising improvement over the comparative examples prepared with Triton N-998 and the control which displayed poor -28.8°C (-20°F) adhesion (suffered adhesive failure at about the same peel strength (0.5-1 g/cm (5-10 oz./in))).

**Table 2**

| | Control 2 | Ex. 3 | Ex. 4 | Ex. 5 | Ex. 6 | Ex.7 | Ex. 8 | Ex. 9 | Ex. 10 | Ex. 11 |
|---|---|---|---|---|---|---|---|---|---|---|
| Additive: | None | L-61³ | L-61 | L-61 | L-81⁴ | L-81 | L-81 | L-101 | L-101 | L-101⁵ |
| Amount: | 0 | 8 | 10 | 12 | 6 | 8 | 10 | 1 | 2 | 4 |

| Peel Values* at: (Measured on LPDE panels) | | | | | | | | | | |
|---|---|---|---|---|---|---|---|---|---|---|
| -17.8°C(0°F): | 54 | PT | PT | PT | 65A | 75A | PT | 70A | 80A | 60A |
| -23.3°C (-10°F): | 50A | PT | PT | 70A | 65* | 75* | PT | 51A | 70A | 48A |
| -28.8°C (-20°F): | 25A | 50A | PT | PT | PT | PT | PT | PT | PT | PT |

| | | | | | | | | | | |
|---|---|---|---|---|---|---|---|---|---|---|
| ³Pluronic L-61 (BASF Corporation; polyoxypropylene hydrophobe ∼ 2000 molecular weight/10% polyoxyethylene on total) | | | | | | | | | | |
| ⁴Pluronic L-81 (BASF Corporation; polyoxypropylene hydrophobe ∼ 2700 molecular weight/10% polyoxyethylene on total) | | | | | | | | | | |
| ⁵Pluronic L-101 (BASF Corporation; polyoxypropylene hydrophobe ∼ 4000 molecular weight/10% polyoxyethylene on total) | | | | | | | | | | |
| *Results quoted are expressed as x 0.1 g/cm (based on the calculation that 1 oz/in is equvalent to 11 g/cm) | | | | | | | | | | |

The data in Table 2 show that various ethylene oxide/propylene oxide block copolymers improve the low temperature performance of the adhesive.

## Claims

1. A method of improving the performance of a pressure sensitive adhesive at temperatures below -17.8°C (0°F) comprising mixing such as formulating the adhesive polymer with an amount of from 0.5 to 20 weight percent of a ethyleneoxide/ propyleneoxide block copolymer surfactant based on total composition.

2. The method of Claim 1 in which the amount of ethyleneoxide/ propyleneoxide block copolymer surfactant is in an amount of from 1 to 16 weight percent.

3. The method of any preceding Claim wherein the adhesive polymer contains up to 98% ethylhexyl acrylate and up to 99% acrylic or methacrylic esters of C₄ to C₁₂ alkanols.

4. The method of any preceding Claim wherein the adhesive polymer contains from 40 to 99% of 2-ethylhexyl acrylate or butyl acrylate.

5. The method of any preceding Claim wherein the ethylene oxide/propylene oxide block copolymer has a molecular weight of from 1,000 to 7,000.

6. The method of any preceding Claim wherein the ethylene oxide/propylene oxide block copolymer has a molecular weight of from 1500 to 4,000.

## Patentansprüche

1. Verfahren zur Verbesserung des Verhaltens eines druckempfindlichen Klebmittels bei Temperaturen unterhalb ∼17,8°C (0°F), dadurch gekennzeichnet, daß man das Klebmittel mit einer Menge von 0,5 bis 20 Gew.-% eines Ethylenoxid/Propylenoxid-Blockcopolymeren oberflächenaktiven Mittels, bezogen auf die Gesamtzusammensetzung, mischt, wie z.B. rezeptiert.

2. Verfahren nach Anspruch 1, dadurch gekennzeichnet, daß die Menge an Ethylenoxid/Propylenoxid-Blockcopolymer oberflächenaktives Mittel in einer Menge von 1 bis 16 Gew.-% vorliegt.

3. Verfahren nach irgendeinem der vorhergehenden Ansprüche, dadurch gekennzeichnet, daß das Klebmittelpolymere bis zu 98% Ethylhexylacrylat und bis zu 99% Acryl- oder Methacrylester von C₄ bis C₁₂ Alkanolen enthält.

4. Verfahren nach irgendeinem der vorhergehenden Ansprüche, dadurch gekennzeichnet, daß das Klebmittelpolymere 40 bis 99% an 2-Ethylhexylacrylat oder Butylacrylat enthält.

5. Verfahren nach irgendeinem der vorhergehenden Ansprüche, dadurch gekennzeichnet, daß das Ethylenoxid/Propylenoxid-Blockcopolymere ein Molekulargewicht von 1000 bis 7000 hat.

6. Verfahren nach irgendeinem der vorhergehenden Ansprüche, dadurch gekennzeichnet, daß das Ethylenoxid/Propylenoxid-Blockcopolymere ein Molekulargewicht von 1500 bis 4000 hat.

## Revendications

1. Procédé pour améliorer les performances d'un adhésif sensible à la pression, à des températures inférieures à -17,8°C (0°F), qui consiste à mélanger, par exemple à formuler, le polymère adhésif avec une quantité comprise entre 0,5 et 20 % en poids, par rapport à la composition totale, d'un tensioactif copolymère séquencé de type oxyde d'éthylène/oxyde de propylène.

2. Procédé selon la revendication 1, dans lequel la quantité de tensioactif copolymère séquencé de type oxyde d'éthylène/oxyde de propylène vaut de 1 à 16 % en poids.

3. Procédé selon l'une quelconque des revendications précédentes, dans lequel le polymère adhésif contient jusqu'à 98 % d'acrylate d'éthylhexyle et jusqu'à 99 % d'acrylates ou de méthacrylates d'alcanols en C₄-C₁₂.

4. Procédé selon l'une quelconque des revendications précédentes, dans lequel le polymère adhésif contient de 40 à 99 % d'acrylate de 2-éthylhexyle ou d'acrylate de butyle.

5. Procédé selon l'une quelconque des revendications précédentes, dans lequel le copolymère séquencé de type oxyde d'éthylène/oxyde de propylène a une masse moléculaire comprise entre 1000 et 7000.

6. Procédé selon l'une quelconque des revendications précédentes, dans lequel le copolymère séquencé de type oxyde d'éthylène/oxyde de propylène a une masse moléculaire comprise entre 1500 et 4000.
